# EUROPEAN PATENT APPLICATION

(11) **EP 4 571 472 A1**
(43) Date of publication of application: **18.06.2025**
(21) Application number: 24219980.0
(22) Date of filing: 13.12.2024
(51) Int. Cl.: G06F 3/0481, G06F 3/00, G06F 3/04886, G06F 3/01, G06F 3/0488

(54) **DISPLAY METHOD, APPARATUS, ELECTRONIC DEVICE, AND STORAGE MEDIUM**

(30) Priority: 15.12.2023 CN 202311737740
(71) Applicant: BEIJING YOUZHUJU NETWORK TECHNOLOGY CO. LTD., Beijing 101299 (CN)
(72) Inventor: Wang, Xiaotian, Beijing, 100028 (CN); Cui, Tengtai, Beijing, 100028 (CN); Chen, Yibin, Beijing, 100028 (CN); Chen, Yuzhong, Beijing, 100028 (CN); Liu, Shaoying, Beijing, 100028 (CN); Chen, Jiahong, Beijing, 100028 (CN); Deng, Lang, Beijing, 100028 (CN); Zhu, Bo, Beijing, 100028 (CN); Jian, Jingtong, Beijing, 100028 (CN); Hou, Kai, Beijing, 100028 (CN); Wang, Fei, Beijing, 100028 (CN)
(74) Representative: Dentons UK and Middle East LLP

(57) **Abstract**

Embodiments of the present disclosure provide a display method, an apparatus, an electronic device, and a storage medium. The display method includes: displaying a media content interface in which element content and media content are displayed; in case that a display state of the element content in the media content interface changes to a target state, adjusting a display relationship between the element content and the media content, wherein the display relationship includes a relationship between a layer where the element content is located and a layer where the media content is located; and displaying, in the media content interface, the element content with the layer adjusted and the media content with the layer adjusted. The display method solves the technical problems of a single interaction form of elements in the interface and poor flexibility. The display method of elements is enriched, and the flexibility of element display is improved.

## Description

### FIELD

Embodiments of the present disclosure relate to the field of computer technologies, and in particular, to a display method, an apparatus, an electronic device, and a storage medium.

### BACKGROUND

An application program is a computer program for completing one or more specific tasks. The application program runs in a user mode, can interact with a user, and has a visual user interface. The user interface is a medium for interaction and information exchange between a system and the user. In the prior art, elements displayed on the user interface have a single interaction form, and flexibility of the elements in the user interface is poor.

### SUMMARY

The present disclosure provides a display method, an apparatus, an electronic device, and a storage medium, to solve the technical problems of a single interaction form of elements in the interface and poor flexibility.

In a first aspect, an embodiment of the present disclosure provides a display method, including:
displaying a media content interface in which element content and media content are displayed;
in case that a display state of the element content in the media content interface changes to a target state, adjusting a display relationship between the element content and the media content, wherein the display relationship includes a relationship between a layer where the element content is located and a layer where the media content is located; and
displaying, in the media content interface, the element content with the layer adjusted and the media content with the layer adjusted.

In a second aspect, an embodiment of the present disclosure further provides a display apparatus, including:
a first display module, configured to display a media content interface in which element content and media content are displayed;
an adjustment module, configured to adjust a display relationship between the element content and the media content in case that a display state of the element content in the media content interface changes to a target state, wherein the display relationship includes a relationship between a layer where the element content is located and a layer where the media content is located; and
a second display module, configured to display, in the media content interface, the element content with the layer adjusted and the media content with the layer adjusted.

In a third aspect, an embodiment of the present disclosure further provides an electronic device. The electronic device includes:
one or more processing apparatuses; and
a storage apparatus, configured to store one or more programs,
where the one or more programs, when executed by the one or more processing apparatuses, cause the one or more processing apparatuses to implement the display method provided in the embodiments of the present disclosure.

In a fourth aspect, an embodiment of the present disclosure further provides a storage medium containing computer-executable instructions. The computer-executable instructions, when executed by a computer processor, are configured to perform the display method provided in the embodiments of the present disclosure.

In the embodiments of the present disclosure, by displaying a media content interface in which element content and media content are displayed; in case that a display state of the element content in the media content interface changes to a target state, adjusting a display relationship between the element content and the media content, wherein the display relationship includes a relationship between a layer where the element content is located and a layer where the media content is located; and displaying, in the media content interface, the element content with the layer adjusted and the media content with the layer adjusted, the technical problems of a single interaction form of elements in the interface and poor flexibility are solved. The display method of elements is enriched, and the flexibility of element display is improved.

### BRIEF DESCRIPTION OF THE DRAWINGS

The above and other features, advantages, and aspects of the embodiments of the present disclosure become more apparent with reference to the following specific implementations and in conjunction with the accompanying drawings. Throughout the drawings, the same or similar reference numerals denote the same or similar elements. It should be understood that the accompanying drawings are schematic and that parts and elements are not necessarily drawn to scale.
FIG. 1 is a schematic flowchart of a display method according to an embodiment of the present disclosure;
FIG. 2 is a schematic flowchart of another display method according to an embodiment of the present disclosure;
FIG. 3 is a schematic diagram of an interface of a media content interface according to an embodiment of the present disclosure;
FIG. 4 is a schematic diagram of an interface change of a media content interface according to an embodiment of the present disclosure;
FIG. 5 is a schematic diagram of a hierarchy change according to an embodiment of the present disclosure;
FIG. 6 is a schematic diagram of a structure of a display apparatus according to an embodiment of the present disclosure; and
FIG. 7 is a schematic diagram of a structure of an electronic device according to an embodiment of the present disclosure.

### DETAILED DESCRIPTION OF EMBODIMENTS

Embodiments of the present disclosure will be described in more detail below with reference to the accompanying drawings. Although some embodiments of the present disclosure are shown in the drawings, it should be understood that the present disclosure may be implemented in various forms and should not be construed as being limited to the embodiments set forth herein. Rather, these embodiments are provided for a more thorough and complete understanding of the present disclosure. It should be understood that the accompanying drawings and the embodiments of the present disclosure are only for exemplary purposes, and are not intended to limit the scope of protection of the present disclosure.

It should be understood that the various steps described in the method implementations of the present disclosure may be performed in different orders, and/or performed in parallel. Further, additional steps may be included and/or the execution of the illustrated steps may be omitted in the method implementations. The scope of the present disclosure is not limited in this respect.

The term "include/comprise" used herein and the variations thereof are an open-ended inclusion, that is, "include/comprise but not limited to". The term "based on" is "at least partially based on". The term "an embodiment" means "at least one embodiment". The term "another embodiment" means "at least one another embodiment". The term "some embodiments" means "at least some embodiments". Related definitions of the other terms will be given in the description below.

It should be noted that the concepts such as "first" and "second" mentioned in the present disclosure are only used to distinguish different apparatuses, modules, or units, and are not used to limit the sequence of functions performed by these apparatuses, modules, or units or interdependence.

It should be noted that the modifiers "one" and "a plurality of' mentioned in the present disclosure are illustrative and not restrictive, and those skilled in the art should understand that unless the context clearly indicates otherwise, the modifiers should be understood as "one or more".

The names of messages or information exchanged between a plurality of apparatuses in the implementations of the present disclosure are used for illustrative purposes only, and are not used to limit the scope of these messages or information.

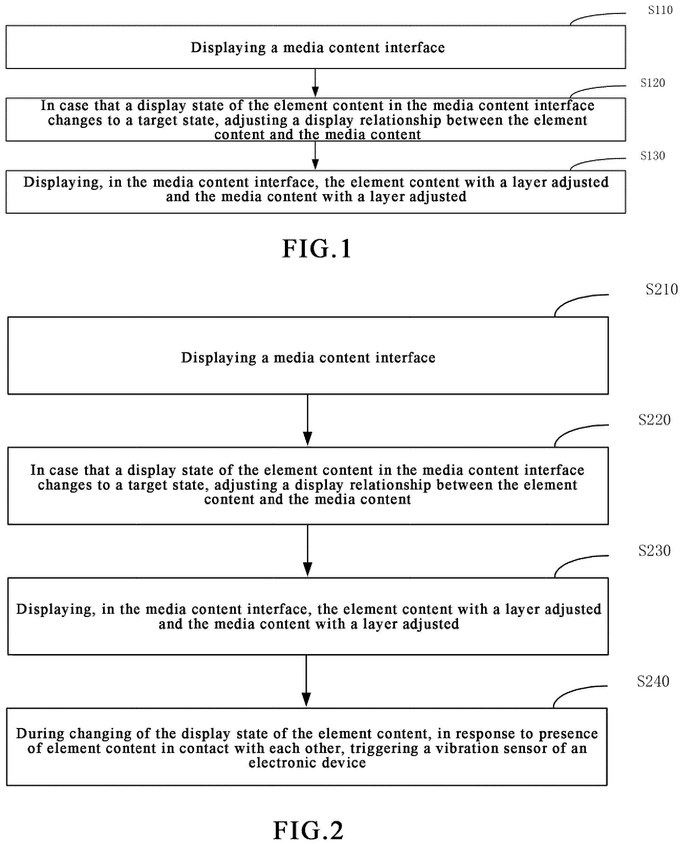

FIG. 1 is a schematic flowchart of a display method according to an embodiment of the present disclosure. The embodiment of the present disclosure is applicable to a situation of performing interface display. The method may be performed by a display apparatus. The apparatus may be implemented in a form of software and/or hardware. Optionally, the display apparatus may be implemented by an electronic device, which may be a mobile terminal, a PC, a server, or the like.

As shown in FIG. 1, the method includes the following steps.

S110: Display a media content interface.

The media content interface may be considered as an interface for displaying media content. The media content may be content that can transmit information. The media content may include audio and a plurality of media resources. The media resources may include images and/or videos. When the media resources include images, the media content may include audio and a plurality of images, and the media content may be understood as a picture work. When the media resources include videos, the media content may include audio and a plurality of videos, and the media content may be understood as a video work. When the media resources include images and videos, the media content may include audio, images, and videos, and the media content may be understood as a mixed work in which pictures and videos are mixed and arranged. The media content may be posted to implement sharing of the media content.

The element content and the media content are displayed in the media content interface. The plurality of media content may be sequentially displayed in the media content interface in a form of an information flow. The present disclosure may use a full-screen container on the information flow to perform layering on a picture.

A user switches media content by swiping in the media content interface. The element content may be an element in the media content interface. A form of the element is not limited, for example, may be a picture, text, and/or a video.

A sequence of displaying the media content and the element content in the media content interface is not limited. The media content and the element content may be displayed simultaneously, or the media content may be displayed first. When an element content display time arrives or a trigger operation for triggering display of the element content is received, the element content is displayed in the media content interface.

In an embodiment, the media content is displayed in the media content interface. In response to a trigger operation for triggering a control in the media content interface, the element content is displayed in the media content interface. The element content may be displayed in full screen in the media content interface, or may be displayed in a set size. A display size of the element content is not limited here, and may be equal to a size of a display screen to implement full-screen display of the element content.

The display method provided in the present disclosure may implement a full-screen interactive effect on a video.

The element content may be displayed in the media content interface in a dynamic form. Different element content may correspond to different display manners. For example, when the element content is content in a gift box style, the element content may be displayed in a form of free fall from a top end of a screen to a bottom end of the screen. For another example, when the element content is fireworks, the fireworks may be set off from a set position on the screen to around the set position.

S120: In case that a display state of the element content in the media content interface changes to a target state, adjust a display relationship between the element content and the media content.

The display state may be considered as a state in which the element content is displayed in the media content interface. For example, a display position in the media content interface, a display form in the media content interface, a moving manner in the media content interface (such as a moving direction in the media content interface), and the like.

The target state may be considered as a state that triggers a change of a layer where the element content is located. The target state is not limited here, and may be set based on a requirement, for example, a business requirement. For example, when the element content is a gift box, a state in which the gift box is opened is used as the target state. After the gift box is opened, the layer of the element content may be adjusted to implement a three-dimensional presentation effect of the element content.

The element content in different states may be shown in different forms. Taking the element content as a gift box as an example, if the target state is that the gift box is opened, the element content may be the gift box before entering the target state, and the element content may be an item stored in the gift box after the target state. Taking the element content as fireworks as an example, the target state may be that the fireworks are ignited. Before entering the target state, the element content may be unignited fireworks. After the target state, the element content may be ignited fireworks.

The display relationship may be considered as a relationship displayed in the media content interface, for example, a hierarchical relationship. The display relationship includes a relationship between a layer where the element content is located and a layer where the media content is located. Content displayed in the media content display interface may be located at different hierarchical levels. For example, the media content is located in at least one layer. The element content is located in one layer.

When the display state of the element content changes to the target state, the display relationship between the media content and the element content may be adjusted, for example, an up-down relationship between the layer where the media content is located and the layer where the element content is located is changed. To implement that the element content is presented in a sight of a user from a far place to a near place or from a near place to a far place.

In this operation, when adjusting the display relationship, the layer where the element content is located and the layer where the media content is located may be changed.

For example, different content in the media content may be located in different layers. For example, a media resource is located in one layer, and a control for implementing human-computer interaction is located in at least one layer.

An up-down relationship between the layer where the media resource is located and the layer where the control for implementing human-computer interaction is located is not limited. An up-down relationship between the layer where the element content is located and the layer where the media resource is located and the layer where the control for implementing human-computer interaction is located is not limited. When adjusting the layer, it is only required to change the layer where the element content is located. For example, the layer where the element content is located is adjusted from a lower layer of the layer where the media content is located to an upper layer of the layer where the media content is located. For another example, the layer where the element content is located is adjusted from a lower layer of the layer where the control for implementing human-computer interaction is located to an upper layer of the layer where the control for implementing human-computer interaction is located.

S130: Display, in the media content interface, the element content with the layer adjusted and the media content with the layer adjusted.

After the layers where the element content and the media content are located are adjusted, in this operation, the adjusted element content and the adjusted media content may be displayed in the media content interface.

Before and after the layer adjustment, the element content and the media content are displayed in the media content interface in different manners. For example, before the adjustment, the media content may be displayed on a top layer of the element content. After the adjustment, the media content may be displayed on a bottom layer of the element content. In terms of visual presentation, before the adjustment, the media content blocks the element content. After the adjustment, the element content blocks the media content, to implement a visual presentation effect of the element content gradually approaching the user, and to give a three-dimensional presentation effect of the element content in a depth direction.

In the technical solution of the embodiment of the present disclosure, by displaying a media content interface in which element content and media content are displayed; in case that a display state of the element content in the media content interface changes to a target state, adjusting a display relationship between the element content and the media content, wherein the display relationship includes a relationship between a layer where the element content is located and a layer where the media content is located; and displaying, in the media content interface, the element content with the layer adjusted and the media content with the layer adjusted, the technical problems of a single interaction form of elements in the interface and poor flexibility are solved. The display method of elements is enriched, and the flexibility of element display is improved.

On the basis of the foregoing embodiments, a variant embodiment of the foregoing embodiment is provided. It should be noted that to make the description brief, only differences between the variant embodiment and the foregoing embodiment are described in the variant embodiment.

In an embodiment, the adjusting a display relationship between the element content and the media content in case that the display state of the element content in the media content interface changes to a target state comprises:
in case that the display state of the element content in the media content interface changes to the target state, adjusting the layer where the element content is located to an upper layer of the layer where the media content is located.

A layer is a technology for managing graphics, images, or other data. In a layer, each element is placed on a separate layer, and the layer may be edited and controlled separately without affecting elements on other layers. The higher the layer is, the closer the layer is to the user.

The upper layer refers to a layer located above another layer. An element in the upper layer blocks an element in a lower layer. Content in the upper layer is displayed at the forefront. The layer where the element content is located is adjusted to an upper layer of the layer where the media content is located. This can make the element content displayed above the media content and at a position closer to the user.

In an embodiment, the layer where the media content is located comprises a layer where a media resource is located and a layer where an interactive control located above the layer where the media resource is located, and accordingly, adjusting the layer where the element content is located to the upper layer of the layer where the media content is located comprises:
adjusting the layer where the element content is located to the upper layer of the layer where the media resource is located.

The interactive control may be considered as a control for implementing a human-computer interaction function, for example, a control for interacting with the media resource, for example, a control for giving a like to the media resource or a control for commenting on the media resource.

In this embodiment, the layer where the element content is located may be located below the layer where the media content is located and above the layer where the human-computer interaction control is located. In this embodiment, when adjusting the layer where the element content is located, the layer where the element content is located may be adjusted to an upper layer of the layer where the media resource is located, so that the layer where the element content is located is a topmost layer.

In an embodiment, the display state of the element content is associated with a use state of an electronic device.

The use state may be a state that represents the electronic device in a use process. For example, a state related to a position of the electronic device. The use state may represent whether the electronic device moves, shakes, and/or is inverted.

The display state of the element content may be synchronized with the use state of the electronic device. For example, when the electronic device shakes, the element content also shakes synchronously in the media content interface. When the electronic device is inverted, the element content is also in an inverted state in the media content interface.

In this embodiment, the use state of the electronic device is associated with the display state of the element content, to enrich an interaction manner of the element content.

In an embodiment, the display method further comprises:
obtaining change information of the use state of the electronic device; and
synchronously adjusting the display state of the element content in the media content interface based on the change information.

The change information may indicate a change of the use state of the electronic device. For example, when the electronic device shakes, the change information may indicate a shaking direction, a displacement, and/or a speed of the electronic device.

After obtaining the change information, in this embodiment, the display state of the element content may be changed corresponding to the change information. For example, the display state is changed to a state the same as the state indicated by the change information.

For example, when the electronic device is inverted, the element content in the media content interface is inverted. When the media content is a gift box, the gift box may fall freely in a direction opposite to that before the electronic device is inverted.

In an embodiment, the display state comprises at least one of a display position, a display form, and a moving direction of the element content in the media content interface.

The display position may be considered as a position where the element content is displayed in the media content interface. The display form may be a form in which the element content is displayed in the media content interface, for example, a gift box form. The moving direction may be considered as a direction in which the element content moves in the media content interface. For example, the element content moves from top to bottom, or from bottom to top.

FIG. 2 is a schematic flowchart of another display method according to an embodiment of the present disclosure. This embodiment further includes a manner of changing a state of a vibration sensor based on a state of element content. Referring to FIG. 2, this embodiment includes the following steps.

S210: Display a media content interface.

S220: In case that a display state of the element content in the media content interface changes to a target state, adjust a display relationship between the element content and the media content.

S230: Display, in the media content interface, the element content with the layer adjusted and the media content with the layer adjusted.

S240: During changing of the display state of the element content, in response to presence of pieces of the element content in contact with each other, trigger a vibration sensor of an electronic device.

The element content has at least two pieces of element content. The contact may be direct contact of the element content in the media content interface, for example, collision of the element content. In this embodiment, whether there are pieces of the element content in contact with each other may be determined based on coordinates where the element content is located. If there are the same coordinates in areas occupied by two pieces of element content, it may be considered that the element content is in contact with each other.

The vibration sensor may be a sensor that implements a vibration function on the electronic device, for example, a motor.

When the element content is in contact with each other, to enrich a tactile sensation of the user, the vibration sensor may be triggered to make the electronic device vibrate. A vibration amplitude may be determined based on a contact force. For example, an amplitude of vibration of the vibration sensor is determined based on a force and/or a speed when the element content is in contact.

This embodiment refines a manner of triggering the vibration sensor when the element content is in contact. The electronic device vibrates through the vibration sensor, to enrich an interaction manner of the element content in a process of human-computer interaction.

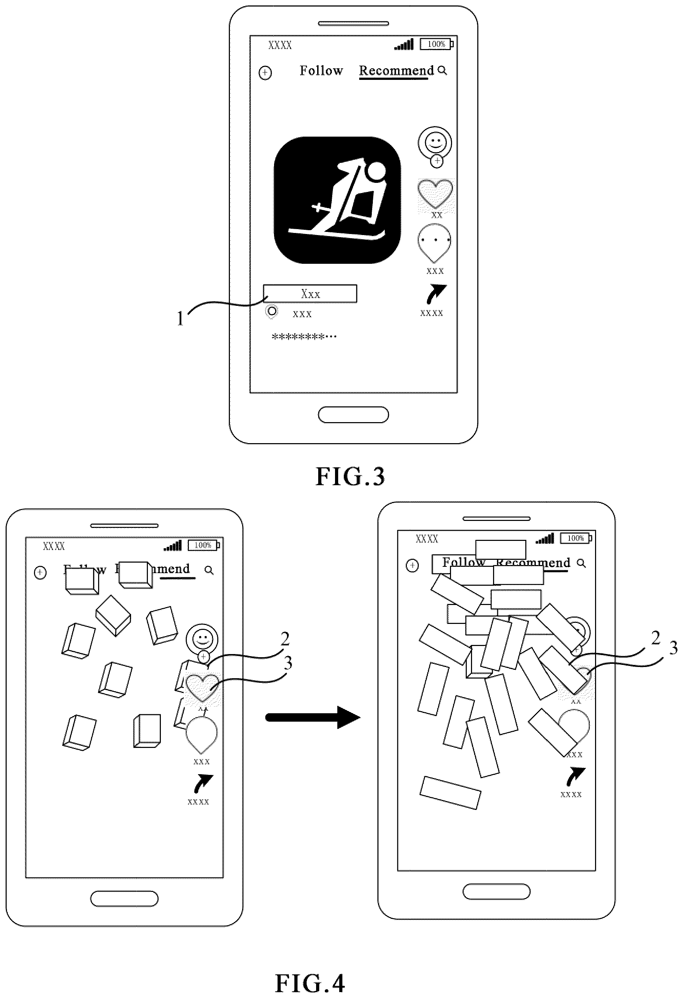

FIG. 3 is a schematic diagram of an interface of a media content interface according to an embodiment of the present disclosure. Referring to FIG. 3, the media content and a trigger control 1 are displayed in the media content interface. The media content interface and the trigger control 1 are not limited here, and a style of the electronic device is not limited either. After the trigger control 1 is clicked, the element content may be displayed in the media content interface.

FIG. 4 is a schematic diagram of an interface change of a media content interface according to an embodiment of the present disclosure. Referring to FIG. 4, after the trigger control shown in FIG. 3 is clicked, the element content 2 may be displayed in the media content interface, and the element content 2 may be displayed on a lower layer of an interactive control 3. The media content displayed in the media content interface is not limited here. When a display state of the element content 2 changes to a target state, that is, changes from a gift box state to a rectangle style, a hierarchical relationship between a layer where the element content 2 is located and a layer where the interactive control 3 is located may be adjusted, that is, the element content 2 is displayed on an upper layer of the interactive control 3.

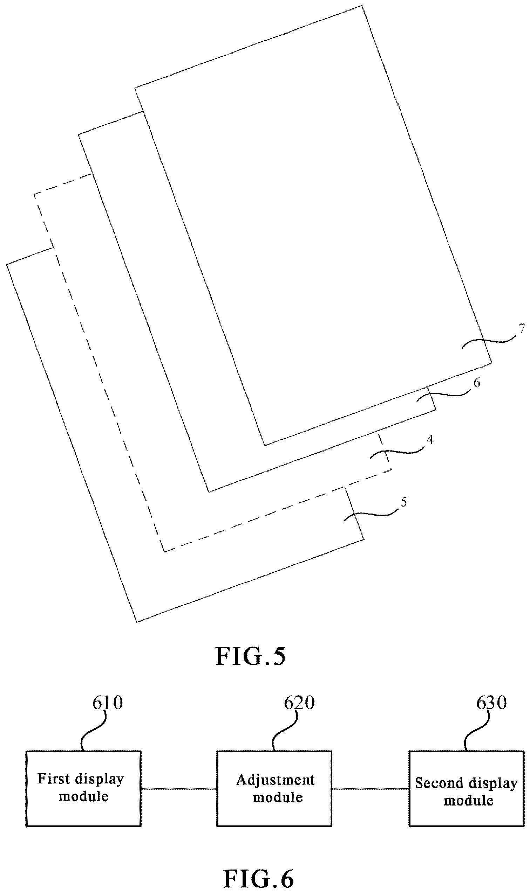

FIG. 5 is a schematic diagram of a hierarchy change according to an embodiment of the present disclosure. Referring to FIG. 5, before hierarchy adjustment, a layer 4 where the element content is located is located between a layer 5 where a media resource is located and a layer 6 where an interactive control is located. After the hierarchy adjustment, a layer 7 where the element is located is located on an upper layer of the layer where the interactive control is located.

The present disclosure may implement various forms of interactive effects with a user through a full-screen container (to implement display of interactive element content in a full-screen range), to implement interaction with an action of the user. For example, a mobile phone is shaken to shake a box, that is, the element content is also shaken. In addition, a tactile sensation of vibration generated by element collision is supported, that is, during changing of the display state of the element content, in response to presence of pieces of the element content in contact with each other, a vibration sensor of an electronic device is triggered.

With the help of a picture layering technology, hierarchical switching may be dynamically controlled to implement an effect of an interactive element out of a frame. That is, the element content is located on an uppermost layer of all human-computer interaction elements through hierarchical switching, to implement an out-of-frame visual effect.

In an information flow scenario, content on a scene is processed by layering, and a full-screen container is inserted at an appropriate position. For example, the full-screen container is respectively located on an upper layer of a video (that is, the layer where the media resource is located), a lower layer of UI elements, and an upper layer of the video and the UI elements (that is, above the layer where the media resource is located, and below the layer where the interactive control is located).

Load cross-platform material content in the full-screen container to achieve the purpose of cross-terminal use. The cross-platform may be across a plurality of operating systems, for example, the material content may be reused in systems such as Android and iOS.

The material content may be displayed in a size of an entire screen, and the content may support real-time interaction with the user. If the user shakes a mobile phone, the material content will receive a shaking state of the mobile phone to shake the material content. When the user inverts the mobile phone, the material content can also receive a state of the mobile phone to make the material content fall freely (that is, obtain change information of the use state of the electronic device, and synchronously adjust the display state of the element content in the media content interface based on the change information).

According to a hierarchy prepared in advance, the present disclosure may achieve an effect of an out-of-frame material element. When the material content is displayed interactively, hierarchical switching may be dynamically controlled according to a scene, and a lower layer and an upper layer of UI elements may be freely selected for seamless dynamic switching, so that displayed content can be transited from the lower layer to the upper layer, thereby implementing the effect of the out-of-frame material element. The present disclosure implements a full-screen interactive effect with an action of the user, and supports a vibration tactile sensation during an interactive process. In a full-screen interactive process, front-to-back hierarchical adjustment of elements is supported to achieve an out-of-frame effect. The element content may also support clicking, and the display state may be changed after the element content is clicked. This promotes a click-through rate of the user and improves an interactive experience.

FIG. 6 is a schematic diagram of a structure of a display apparatus according to an embodiment of the present disclosure. As shown in FIG. 6, the apparatus includes:
a first display module 610, configured to display a media content interface in which element content and media content are displayed;
an adjustment module 620, configured to adjust a display relationship between the element content and the media content in case that a display state of the element content in the media content interface changes to a target state, wherein the display relationship includes a relationship between a layer where the element content is located and a layer where the media content is located; and
a second display module 630, configured to display, in the media content interface, the element content with the layer adjusted and the media content with the layer adjusted.

The technical solution provided in the embodiment of the present disclosure solves the technical problems of a single interaction form of elements in the interface and poor flexibility. The display method of elements is enriched, and the flexibility of element display is improved.

In an embodiment, the adjustment module 620 includes an adjustment unit, configured to:
in case that the display state of the element content in the media content interface changes to the target state, adjust the layer where the element content is located to an upper layer of the layer where the media content is located.

In an embodiment, the layer where the media content is located comprises a layer where a media resource is located and a layer where an interactive control located above the layer where the media resource is located, and accordingly, the adjustment unit is specifically configured to:
adjust the layer where the element content is located to an upper layer of the layer where the media resource is located.

In an embodiment, the display state of the element content is associated with a use state of an electronic device.

In an embodiment, the display apparatus further comprises a synchronization module, configured to:
obtain change information of the use state of the electronic device; and
synchronously adjust the display state of the element content in the media content interface based on the change information.

In an embodiment, the display state comprises at least one of a display position, a display form, and a moving direction of the element content in the media content interface.

In an embodiment, the element content has at least two pieces of element content, and the display apparatus further comprises a trigger module, configured to:
during changing of the display state of the element content, in response to presence of pieces of the element content in contact with each other, trigger a vibration sensor of an electronic device.

The display apparatus provided in the embodiment of the present disclosure may perform the display method provided in any embodiment of the present disclosure, and has corresponding functional modules and beneficial effects for performing the method.

It should be noted that each unit and module included in the foregoing apparatus are divided according to functional logic, but are not limited to the foregoing division, as long as corresponding functions can be implemented. In addition, specific names of the functional units are only used to distinguish each other conveniently, and are not used to limit the scope of protection of the embodiments of the present disclosure.

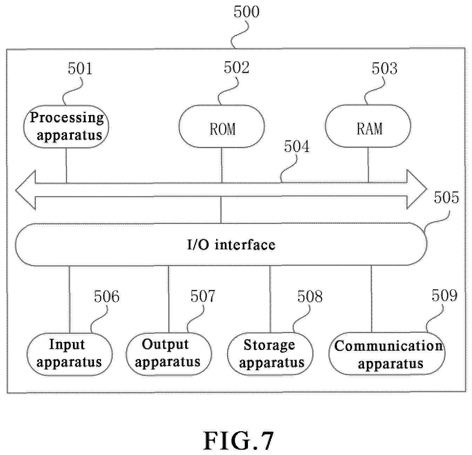

FIG. 7 is a schematic diagram of a structure of an electronic device according to an embodiment of the present disclosure. The following refers to FIG. 7, which shows a schematic diagram of a structure of an electronic device (for example, a terminal device or a server in FIG. 7) 500 suitable for implementing the embodiment of the present disclosure.

The electronic device 500 includes:
one or more processing apparatuses 501; and
a storage apparatus 508, configured to store one or more programs,
wherein the one or more programs, when executed by the one or more processing apparatuses 501, cause the one or more processing apparatuses 501 to implement the display method provided in the present disclosure.

A terminal device in the embodiment of the present disclosure may include but is not limited to mobile terminals such as a mobile phone, a notebook computer, a digital broadcast receiver, a personal digital assistant (PDA), a tablet computer (PAD), a portable multimedia player (PMP), and a vehicle-mounted terminal (for example, a vehicle navigation terminal), and fixed terminals such as a digital TV and a desktop computer. The electronic device 500 shown in FIG. 7 is merely an example, and shall not impose any limitation on the function and scope of use of the embodiment of the present disclosure.

As shown in FIG. 7, the electronic device 500 may include a processing apparatus (for example, a central processor, a graphics processor, etc.) 501, which may perform various appropriate actions and processing in accordance with a program stored in a read-only memory (ROM) 502 or a program loaded from a storage apparatus 508 into a random access memory (RAM) 503. The RAM 503 further stores various programs and data required for the operation of the electronic device 500. The processing apparatus 501, the ROM 502, and the RAM 503 are connected to each other through a bus 504. An edit/output (I/O) interface 505 is also connected to the bus 504.

Generally, the following apparatuses may be connected to the I/O interface 505: an input apparatus 506 including, for example, a touch screen, a touchpad, a keyboard, a mouse, a camera, a microphone, an accelerometer, and a gyroscope; an output apparatus 507 including, for example, a liquid crystal display (LCD), a speaker, and a vibrator; the storage apparatus 508 including, for example, a tape and a hard disk; and a communication apparatus 509. The communication apparatus 509 may allow the electronic device 500 to perform wireless or wired communication with other devices to exchange data. Although FIG. 7 shows the electronic device 500 having various apparatuses, it should be understood that it is not required to implement or have all of the shown apparatuses. It may be an alternative to implement or have more or fewer apparatuses.

In particular, according to an embodiment of the present disclosure, the process described above with reference to the flowcharts may be implemented as a computer software program. For example, this embodiment of the present disclosure includes a computer program product, which includes a computer program carried on a non-transitory computer-readable medium, wherein the computer program includes program code for performing the method shown in the flowchart. In such an embodiment, the computer program may be downloaded from a network through the communication apparatus 509 and installed, or installed from the storage apparatus 508, or installed from the ROM 502. When the computer program is executed by the processing apparatus 501, the above-mentioned functions defined in the method of the embodiment of the present disclosure are executed.

Names of messages or information exchanged between a plurality of apparatuses in the implementations of the present disclosure are used for illustrative purposes only, and are not used to limit the scope of these messages or information.

The electronic device provided in the embodiment of the present disclosure and the display method provided in the foregoing embodiment belong to the same inventive concept. For technical details not described in detail in this embodiment, reference may be made to the foregoing embodiment, and this embodiment and the foregoing embodiment have the same beneficial effects.

An embodiment of the present disclosure provides a computer storage medium having a computer program stored thereon, wherein when the program is executed by a processor, the display method provided in the foregoing embodiment is implemented.

It should be noted that the foregoing computer-readable medium described in the present disclosure may be a computer-readable signal medium, a computer-readable storage medium, or any combination thereof.

The computer storage medium may be a storage medium for computer-executable instructions. The computer-executable instructions, when executed by a computer processor, are configured to perform the method provided in the present disclosure.

For example, the computer-readable storage medium may be, but is not limited to: electric, magnetic, optical, electromagnetic, infrared, or semiconductor systems, apparatuses, or devices, or any combination thereof. A more specific example of the computer-readable storage medium may include, but is not limited to: an electrical connection having one or more wires, a portable computer magnetic disk, a hard disk, a random access memory (RAM), a read-only memory (ROM), an erasable programmable read-only memory (EPROM or flash memory), an optic fiber, a portable compact disk read-only memory (CD-ROM), an optical storage device, a magnetic storage device, or any suitable combination thereof. In the present disclosure, the computer-readable storage medium may be any tangible medium containing or storing a program that may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may also be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), and the like, or any suitable combination thereof.

In some implementations, the client and the server may communicate using any currently known or future-developed network protocol such as a hypertext transfer protocol (HTTP), and may be connected to digital data communication (for example, a communication network) in any form or medium. Examples of the communication network include a local area network ("LAN"), a wide area network ("WAN"), an internetwork (for example, the Internet), a peer-to-peer network (for example, an ad hoc peer-to-peer network), and any currently known or future-developed network.

The computer-readable medium may be contained in the foregoing electronic device; or may exist independently, without being assembled into the electronic device.

The computer-readable medium carries one or more programs that, when executed by the electronic device, cause the electronic device to:
The computer-readable medium carries one or more programs that, when executed by the electronic device, cause the electronic device to: display a media content interface in which element content and media content are displayed;
in case that a display state of the element content in the media content interface changes to a target state, adjust a display relationship between the element content and the media content, wherein the display relationship includes a relationship between a layer where the element content is located and a layer where the media content is located; and
display, in the media content interface, the element content with the layer adjusted and the media content with the layer adjusted.

The computer program code for performing the operations of the present disclosure may be written in one or more programming languages or a combination thereof, wherein the programming languages include but are not limited to an object-oriented programming language, such as Java, Smalltalk, and C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case involving a remote computer, the remote computer may be connected to the computer of the user through any kind of network, including a local area network (LAN) or a wide area network (WAN), or may be connected to an external computer (for example, connected through the Internet using an Internet service provider).

The flowcharts and block diagrams in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The modules or units involved in the descriptions of the embodiments of the present disclosure may be implemented by software, or may be implemented by hardware. The name of a module or unit does not constitute a limitation on the unit itself in some cases. For example, the first display module may alternatively be described as a "media content interface module".

The functions described above herein may be performed at least partially by one or more hardware logic components. For example, without limitation, exemplary types of hardware logic components that may be used include: a field programmable gate array (FPGA), an application-specific integrated circuit (ASIC), an application-specific standard product (ASSP), a system on a chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include but is not limited to electronic, magnetic, optical, electromagnetic, infrared, or semiconductor systems, apparatuses, or devices, or any suitable combination thereof. A more specific example of the machine-readable storage medium may include an electrical connection based on one or more wires, a portable computer magnetic disk, a hard disk, a random access memory (RAM), a read-only memory (ROM), an erasable programmable read-only memory (EPROM or flash memory), an optic fiber, a portable compact disk read-only memory (CD-ROM), an optical storage device, a magnetic storage device, or any suitable combination thereof.

According to one or more embodiments of the present disclosure, [Example 1] provides a display method, including:
displaying a media content interface in which element content and media content are displayed;
in case that a display state of the element content in the media content interface changes to a target state, adjusting a display relationship between the element content and the media content, wherein the display relationship includes a relationship between a layer where the element content is located and a layer where the media content is located; and
displaying, in the media content interface, the element content with the layer adjusted and the media content with the layer adjusted.

According to one or more embodiments of the present disclosure, [Example 2] provides the method according to Example 1, wherein adjusting a display relationship between the element content and the media content in case that the display state of the element content in the media content interface changes to a target state comprises:
in case that the display state of the element content in the media content interface changes to the target state, adjusting the layer where the element content is located to an upper layer of the layer where the media content is located.

According to one or more embodiments of the present disclosure, [Example 3] provides the method according to Example 2, wherein the layer where the media content is located comprises a layer where a media resource is located and a layer where an interactive control located above the layer where the media resource is located, and accordingly, adjusting the layer where the element content is located to the upper layer of the layer where the media content is located comprises:
adjusting the layer where the element content is located to the upper layer of the layer where the media resource is located.

According to one or more embodiments of the present disclosure, [Example 4] provides the method according to Example 1, wherein the display state of the element content is associated with a use state of an electronic device.

According to one or more embodiments of the present disclosure, [Example 5] provides the method according to Example 4, further comprising:
obtaining change information of the use state of the electronic device; and
synchronously adjusting the display state of the element content in the media content interface based on the change information.

According to one or more embodiments of the present disclosure, [Example 6] provides the method according to Example 1, wherein the display state comprises at least one of a display position, a display form, and a moving direction of the element content in the media content interface.

According to one or more embodiments of the present disclosure, [Example 7] provides the method according to Example 1, wherein the element content has at least two pieces of element content, and the method further comprises:
during changing of the display state of the element content, in response to presence of pieces of the element content in contact with each other, trigger a vibration sensor of an electronic device.

According to one or more embodiments of the present disclosure, [Example 8] provides a display apparatus, including:
a first display module, configured to display a media content interface in which element content and media content are displayed;
an adjustment module, configured to adjust a display relationship between the element content and the media content in case that a display state of the element content in the media content interface changes to a target state, wherein the display relationship includes a relationship between a layer where the element content is located and a layer where the media content is located; and
a second display module, configured to display, in the media content interface, the element content with the layer adjusted and the media content with the layer adjusted.

According to one or more embodiments of the present disclosure, [Example 9] provides an electronic device, wherein the electronic device includes:
one or more processing apparatuses; and
a storage apparatus, configured to store one or more programs,
wherein the one or more programs, when executed by the one or more processing apparatuses, cause the one or more processing apparatuses to implement the display method according to any one of Examples 1 to 7.

According to one or more embodiments of the present disclosure, [Example 10] provides a storage medium containing computer-executable instructions, wherein the computer-executable instructions, when executed by a computer processor, are configured to perform the display method according to any one of Examples 1 to 7.

The foregoing descriptions are merely preferred embodiments of the present disclosure and explanations of the applied technical principles. Persons skilled in the art should understand that the scope of disclosure involved in the present disclosure is not limited to the technical solutions formed by specific combinations of the foregoing technical features, and shall also cover other technical solutions formed by any combination of the foregoing technical features or equivalent features thereof without departing from the foregoing concept of disclosure. For example, a technical solution formed by replacing the foregoing features with technical features with similar functions disclosed in the present disclosure (but not limited thereto).

In addition, although the various operations are described in a specific order, it should be understood as requiring these operations to be performed in the specific order shown or in a sequential order. Under specific circumstances, multitasking and parallel processing may be advantageous. Similarly, although several specific implementation details are included in the foregoing discussions, these details should not be construed as limiting the scope of the present disclosure. Some features that are described in the context of separate embodiments may alternatively be implemented in combination in a single embodiment. In contrast, various features described in a single embodiment may alternatively be implemented in a plurality of embodiments individually or in any suitable subcombination.

Although the subject matter has been described in a language specific to structural features and/or logical actions of the method, it should be understood that the subject matter specified in the appended claims is not necessarily limited to the specific features or actions described above. In contrast, the specific features and actions described above are merely exemplary forms of implementing the claims.

## Claims

1. A display method, comprising:
displaying (S 110) a media content interface in which element content and media content are displayed;
in case that a display state of the element content in the media content interface changes to a target state, adjusting (S120) a display relationship between the element content and the media content, wherein the display relationship comprises a relationship between a layer where the element content is located and a layer where the media content is located; and
displaying (S130), in the media content interface, the element content with the layer adjusted and the media content with the layer adjusted.

2. The method according to claim 1, wherein in case that a display state of the element content in the media content interface changes to the target state, adjusting (S120) the display relationship between the element content and the media content comprises:
in case that the display state of the element content in the media content interface changes to the target state, adjusting the layer where the element content is located to an upper layer of the layer where the media content is located.

3. The method according to claim 2, wherein the layer where the media content is located comprises a layer where a media resource is located and a layer where an interactive control located above the layer where the media resource is located, and accordingly, adjusting the layer where the element content is located to the upper layer of the layer where the media content is located comprises:
adjusting the layer where the element content is located to the upper layer of the layer where the media resource is located.

4. The method according to claim 1, wherein the display state of the element content is associated with a use state of an electronic device (500).

5. The method according to claim 4, further comprising:
obtaining change information of the use state of the electronic device (500); and
synchronously adjusting the display state of the element content in the media content interface based on the change information.

6. The method according to claim 1, wherein the display state comprises at least one of a display position, a display form, and a moving direction of the element content in the media content interface.

7. The method according to claim 1, wherein the element content has at least two pieces of element content, and the method further comprises:
during changing of the display state of the element content, in response to presence of pieces of the element content in contact with each other, triggering a vibration sensor of an electronic device.

8. A display apparatus, comprising:
a first display module (610), configured to display a media content interface in which element content and media content are displayed;
an adjustment module (620), configured to adjust a display relationship between the element content and the media content in case that a display state of the element content in the media content interface changes to a target state, wherein the display relationship comprises a relationship between a layer where the element content is located and a layer where the media content is located; and
a second display module (630), configured to display, in the media content interface, the element content with the layer adjusted and the media content with the layer adjusted.

9. An electronic device (500), comprising:
one or more processing apparatuses (501); and
a storage apparatus (508), configured to store one or more programs,
wherein the one or more programs, when executed by the one or more processing apparatuses (501), cause the one or more processing apparatuses (501) to implement the display method according to any of claims 1 to 7.

10. A storage medium containing computer-executable instructions, wherein the computer-executable instructions, when executed by a computer processor, are configured to perform the display method according to any of claims 1 to 7.
